# FASCICULE DE BREVET EUROPEEN

(11) **EP 2 948 301 B1**
(45) Date de publication et mention de la délivrance du brevet: **22.06.2016**
(21) Numéro de dépôt: 14825400.6
(22) Date de dépôt: 02.12.2014
(51) Int. Cl.: B32B 7/06, B32B 7/12, B32B 3/14, B32B 3/18, B32B 3/26

(54) **CALE D'ÉPAISSEUR D'INTERPOSITION ENTRE LES SURFACES EN REGARD DE DEUX PIÈCES**
ZWISCHENSTÜCK ZUM EINSETZEN ZWISCHEN GEGENÜBERLIEGENDEN OBERFLÄCHEN ZWEIER TEILE
SHIM FOR INSERTION BETWEEN THE FACING SURFACES OF TWO PARTS

(30) Priorité: 06.12.2013 FR 1362251
(43) Date de publication de la demande: 02.12.2015
(60) Demande divisionnaire: 16169226.4
(73) Titulaire: Gastel, Daniel André, 78370 Plaisir les Gatines (FR)
(72) Inventeur: Gastel, Daniel André, 78370 Plaisir les Gatines (FR)
(74) Mandataire: Lefevre-Groboillot, David André
(86) Numéro de dépôt international: PCT/FR2014/053123
(87) Numéro de publication internationale: WO 2015/082826

(56) Documents cités:
- EP-A1- 2 329 946
- FR-A1- 2 831 095
- US-A- 4 793 482
- US-A- 5 853 838

## Description

L'invention concerne une Cale d'épaisseur d'interposition entre les surfaces en regard de deux pièces, dont l'écart est variable.

On connait déjà des cales de ce type, qui sont spécifiquement conçues, lors de leur fabrication, en général en métal, pour chaque cas d'application et présentent donc une forme établie une fois pour toute, compatible à l'espace entre les deux pièces.

L'invention a pour but de pallier cet inconvénient.

Pour atteindre ce but, la cale selon l'invention est caractérisée en ce qu'elle comporte une pluralité de sections juxtaposées dans la direction de variation de l'écart, dont au moins certaines sont des sections de cale pelables, formées par l'empilement d'une multitude de feuilles qui adhèrent les unes aux autres par interposition d'une couche d'adhésif.

Selon une caractéristique de l'invention, la cale est caractérisée en ce que deux sections adjacentes sont séparés par une fente pratiquée dans l'épaisseur à partir de la surface supérieure de la cale jusqu'à une profondeur prédéterminée.

Selon une autre caractéristique de l'invention, la cale est caractérisée en ce que les fentes sont adaptées pour permettre la saisie chaque fois de la feuille supérieure de la pile de section délimitée par la fente pour enlever cette feuille.

Selon encore une autre caractéristique de l'invention, la cale est caractérisée en ce que les fentes sont inclinées par rapport à la direction de juxtaposition des sections, selon un angle prédéterminé.

Selon encore une autre caractéristique de l'invention, la cale est caractérisée en ce que l'angle d'inclinaison est compris entre 90 et 30°, de préférence 90 à 45°.

Selon encore une autre caractéristique de l'invention, la cale est caractérisée en ce que les fentes sont effectuées par fraisage.

Selon encore une autre caractéristique de l'invention, la cale est caractérisée en ce que les piles de feuilles des sections sont disposées sur une couche de base commune et en ce que les fentes s'étendent jusqu'à cette couche.

Selon encore une autre caractéristique de l'invention, la cale est caractérisée en ce que les feuilles sont réalisées en un matériau tel que du métal, PET, tissu de verre du carbone.

Selon encore une autre caractéristique de l'invention, la cale est caractérisée en ce que l'adhésif est une colle flexible telle qu'une colle néoprène.

Selon encore une autre caractéristique de l'invention, la cale est caractérisée en ce que les feuilles d'une pile de section ont une épaisseur de l'ordre d'un dixième de millimètre.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue latérale d'une cale de selon l'état de la technique, dont la hauteur varie dans la direction longitudinale ;
- la figure 2 est une vue d'une première version de réalisation d'une cale pelable selon l'invention, avant délitage ;
- la figure 3 est une vue latérale de la cale de la figure 2, délitée pour correspondre à la forme de la cale selon la figure 1 ;
- la figure 4 montre une autre version de réalisation d'une cale selon l'invention à l'état correspondant à la figure 3 ;
- la figure 5 montre une cale selon la figure 4, qui est courbée dans sa direction longitudinale.

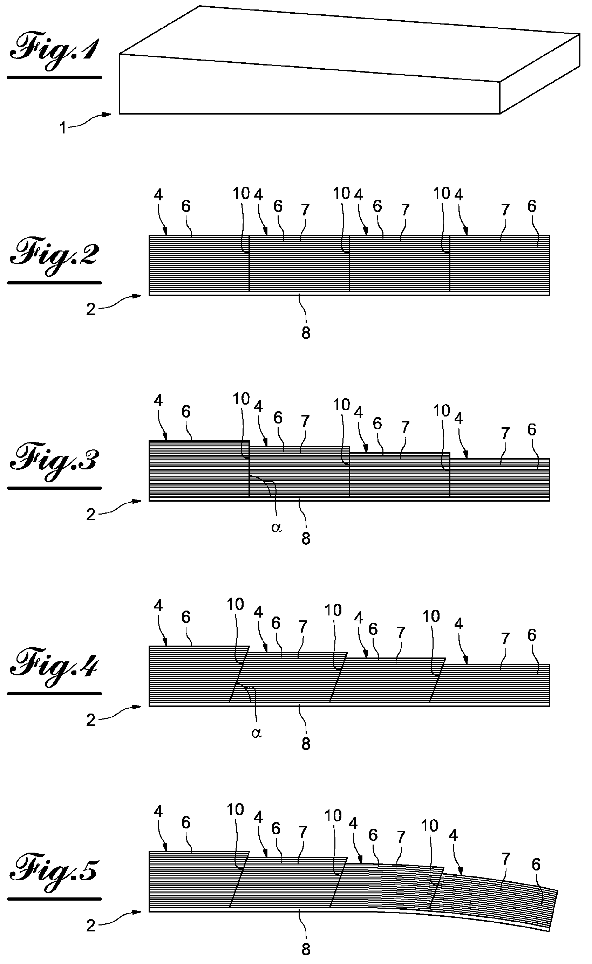

La figure 1 montre une cale 1 de l'état de la technique qui est conçue pour être interposée entre les surfaces en regard de deux pièces, dont l'écart varie progressivement d'une extrémité à l'autre. Cette cale présente donc une épaisseur qui varie progressivement de façon complémentaire dans la direction de sa longueur. La cale a été fabriquée pour cette application spécifique et n'est donc pas utilisable pour d'autres applications.

Les cales d'épaisseur selon l'invention pallient cet inconvénient.

Comme il ressort des figures, leur épaisseur est adaptable à des espaces d'interposition entre des surfaces de deux pièces, dont l'écart varie. A cette fin, une cale selon l'invention notée 2 comprend une pluralité de sections 4 juxtaposée dans la direction longitudinale de la cale et dont chacune constitue une cale pelable formée par l'empilement d'une multitude de feuilles 6 qui adhèrent les unes aux autres par interposition d'une couche d'adhésif 7. Cet adhésif permet de maintenir les feuilles assemblées les unes aux autres tout en assurant un ajustement de la hauteur de l'empilement par délitage d'une ou plusieurs feuilles. Par conséquent, la force de cohésion de deux feuilles adjacentes est supérieure à la valeur de maintien de la pile, mais inférieure à la force de délitage.

Comme on le voit sur les figures, les différentes piles de feuilles 4 sont juxtaposées sur une couche de base continue 8 qui constitue donc la base commune à toutes les piles.

Les différentes piles 6 sont séparées les unes des autres par une fente 10 s'étendant de la surface supérieure des piles jusqu'à la couche de base 8. L'épaisseur de cette fente est avantageusement choisie de façon à permettre la saisie de feuilles pour pouvoir enlever chaque fois la feuille supérieure d'une pile. Cette fente 10 peut être orientée par rapport à la direction longitudinale de la cale selon un angle α comprise entre 90 et 30°, de préférence entre 90 et 45°. Grâce à cette inclinaison une pile peut prendre appui sur la pile adjacente. Concernant l'orientation des fentes dans le sens de la largeur de la cale, elle est avantageusement, mais pas obligatoirement perpendiculaire à la direction longitudinale.

Comme le montre la figure 2, une cale selon l'invention, pourvue de sections individuellement pelables est avantageusement obtenue à partir d'une cale pelable comportant un empilement d'une pluralité de feuilles s'étendant sur toute la longueur de la cale. Les piles individuelles 6 sont ensuite réalisées en faisant des coupes à partir de la surface supérieure de cette cale jusqu'à la couche de base, par exemple par fraisage ou selon tout autre procédé de coupe connu.

Conformément à la figure 5, la cale selon l'invention peut être courbe. A cette fin, il est préférable que les fentes 10 de séparation des piles individuelles 6 soient inclinées dans le sens indiqué par rapport à la couche de base 8. Cette inclinaison présente l'avantage qu'elle part dans le même sens que la courbure.

Concernant les feuilles, elles peuvent être réalisées en tout matériau approprié, par exemple en PET, tissu de verre ou carbone et liées entre elles par toutes colles ou résines, telles que le néoprène, l'époxyde, le cyanate-ester. Les épaisseurs des feuilles correspondront à la précision requise. Elles pourraient par exemple avoir une épaisseur d'un dixième de millimètre.

Bien entendu des multiples modifications peuvent être apportées à l'invention telle que décrite et représentée sur les figures. Dans l'exemple qui vient d'être décrit, les piles sont juxtaposées dans le sens longitudinal de la cale. On pourrait aussi prévoir des piles juxtaposées dans le sens de la largeur. Ces piles seraient alors séparées par des fentes orientées en conséquence. L'invention couvre bien entendu aussi des cales comportant des piles juxtaposées dans le sens de la longueur et de la largeur.

## Revendications

1. Cale d'épaisseur d'interposition entre les surfaces en regard de deux pièces, dont l'écart est variable, **caractérisée en ce qu'**elle comporte une pluralité de sections juxtaposées dans la direction de variation de l'écart, dont au moins certaines sont des sections (4) de cale pelable individuellement pelables, formées par l'empilement d'une multitude de feuilles (6) qui, au sein de chaque section, adhèrent les unes aux autres par interposition d'une couche d'adhésif (7), deux sections (4) de cale pelable individuellement pelables adjacentes étant séparées par une fente (10) pratiquée dans l'épaisseur à partir de la surface supérieure de la cale.

2. Cale selon la revendication 1, **caractérisée en ce que** les fentes (10) sont adaptées pour permettre la saisie chaque fois de la feuille supérieure de la pile de section délimitée par la fente pour enlever cette feuille.

3. Cale selon la revendication 1 ou la revendication 2, **caractérisée en ce que** les fentes (10) sont inclinées par rapport à la direction de juxtaposition des sections (4).

4. Cale selon l'une des revendications 1 à 3, **caractérisée en ce que** l'angle d'inclinaison (α) est compris entre 90 et 30°, de préférence 90 à 45°.

5. Cale selon l'une des revendications 1 à 4, **caractérisée en ce que** les fentes résultent d'un fraisage.

6. Cale selon l'une des revendications 1 à 5, **caractérisée en ce que** les piles de feuilles (6) des sections (4) sont disposées sur une couche de base commune (8) et **en ce que** les fentes (10) séparant les sections s'étendent jusqu'à cette couche.

7. Cale selon l'une des revendications 1 à 6, **caractérisée en ce que** les feuilles (6) sont réalisées en un matériau tel que du métal, PET, tissu de verre ou carbone.

8. Cale selon l'une des revendications 1 à 7, **caractérisée en ce que** l'adhésif est une colle flexible telle qu'une colle néoprène.

9. Cale selon l'une des revendications 1 à 8, **caractérisée en ce que** les feuilles (6) d'une pile de section (4) ont une épaisseur de l'ordre d'un dixième de millimètre.

## Patentansprüche

1. Abstandsstück zum Einfügen zwischen die einander gegenüber liegenden Oberflächen zweier Teile, deren Abstand variabel ist, **dadurch gekennzeichnet, daß** es eine Mehrzahl von in der Richtung der Abstandsänderung aneinander gereihten Abschnitten aufweist, von denen wenigstens einige einzeln abziehbare Abschnitte (4) eines abziehbaren Abstandsstücks sind, die aus einer Aufschichtung einer Mehrzahl von Bogen (6) gebildet sind, die in jedem Abschnitt durch Einlage einer Kleberschicht (7) aneinander haften, wobei zwei aneinander grenzende, einzeln abziehbare Abschnitte (4) des abziehbaren Abstandsstücks durch einen von der oberen Oberfläche des Abstandsstücks aus in der Dicke geformten Spalt (10) getrennt sind.

2. Abstandsstück nach Anspruch 1, **dadurch gekennzeichnet, daß** die Spalte (10) dazu ausgelegt sind, zu ermöglichen, daß der jeweils obere Bogen der durch den Spalt begrenzten Aufschichtung des Abschnitts erfaßt wird, um diesen Bogen abzuziehen.

3. Abstandsstück nach Anspruch 1 oder Anspruch 2, **dadurch gekennzeichnet, daß** die Spalte (10) gegenüber der Richtung der Aneinanderreihung der Abschnitte (4) geneigt sind.

4. Abstandsstück nach einem der Ansprüche 1 bis 3, **dadurch gekennzeichnet, daß** der Neigungswinkel (α) zwischen 90° und 30°, vorzugsweise zwischen 90° und 45° beträgt.

5. Abstandsstück nach einem der Ansprüche 1 bis 4, **dadurch gekennzeichnet, daß** die Spalte durch Fräsen gebildet sind.

6. Abstandsstück nach einem der Ansprüche 1 bis 5, **dadurch gekennzeichnet, daß** die Aufschichtungen der Bogen (6) der Abschnitte (4) auf einer gemeinsamen Grundschicht (8) angeordnet sind und daß sich die die Abschnitte trennenden Spalte (10) bis zu dieser Schicht erstrecken.

7. Abstandsstück nach einem der Ansprüche 1 bis 6, **dadurch gekennzeichnet, daß** die Bogen (6) aus einem Material wie Metall, PET, Glasfasergewebe oder Kohlefasergewebe bestehen.

8. Abstandsstück nach einem der Ansprüche 1 bis 7, **dadurch gekennzeichnet, daß** der Kleber ein flexibler Kleber wie zum Beispiel ein Neopren-Kleber ist.

9. Abstandsstück nach einem der Ansprüche 1 bis 8, **dadurch gekennzeichnet, daß** die Bogen (6) einer Aufschichtung eines Abschnitts (4) eine Dicke in der Größenordnung von einem Zehntel Millimeter aufweisen.

## Claims

1. A shim for insertion between the facing surfaces of two parts, the gap of which is variable, **characterized in that** it includes a plurality of sections juxtaposed in the variation direction of the gap, at least some of which are strippable shim sections (4) that can be stripped individually, formed by stacking a multitude of sheets (6) which, within each section, adhere to one another by interposition of an adhesive layer (7), two adjacent strippable shim sections (4) able to be stripped individually being separated by a slit (10) formed in the thickness from the upper surface of the shim.

2. The shim according to claim 1, **characterized in that** the slits (10) are suitable for making it possible to grasp, each time, the upper sheet of the section stack defined by the slit to remove that sheet.

3. The shim according to claim 1 or claim 2, **characterized in that** the slits (10) are inclined relative to the juxtaposition direction of the sections (4).

4. The shim according to one of claims 1 to 3, **characterized in that** the incline angle (α) is comprised between 90 and 30°, preferably between 90 and 45°.

5. The shim according to one of claims 1 to 4, **characterized in that** the slits are the result of milling.

6. The shim according to one of claims 1 to 5, **characterized in that** the stacks of sheets (6) of the sections (4) are positioned on a shared base layer (8) and **in that** the slits (10) separating the sections extend to that layer.

7. The shim according to one of claims 1 to 6, **characterized in that** the sheets (6) are made from a material such as metal, PET, glass cloth or carbon.

8. The shim according to one of claims 1 to 7, **characterized in that** the adhesive is a flexible glue such as a neoprene glue.

9. The shim according to one of claims 1 to 8, **characterized in that** the sheets (6) of a section stack (4) have a thickness of about one tenth of a millimeter.
